Europäisches Patentamt

European Patent Office

Office européen des brevets

(19)

(11) Numéro de publication : **0 403 622 B1**

## (12) FASCICULE DE BREVET EUROPEEN

(45) Date de publication du fascicule du brevet :
**07.07.93 Bulletin 93/27**

(51) Int. Cl.[5] : **C03C 10/00,** C03C 4/02,
C03C 3/07

(21) Numéro de dépôt : **90900215.6**

(22) Date de dépôt : **12.12.89**

(86) Numéro de dépôt international :
**PCT/FR89/00647**

(87) Numéro de publication internationale :
**WO 90/07471 12.07.90 Gazette 90/16**

(54) PROCEDE DE FABRICATON D'UN MATERIAU VITREUX UTILISABLE NOTAMMENT EN JOAILLERIE.

(30) Priorité : **28.12.88 FR 8817336**

(43) Date de publication de la demande :
**27.12.90 Bulletin 90/52**

(45) Mention de la délivrance du brevet :
**07.07.93 Bulletin 93/27**

(84) Etats contractants désignés :
**CH DE GB IT LI**

(56) Documents cités :
**Glass Technology, vol. 22, no. 1, February
1981 (Sheffield, GB), A.A. Ahmed et al.: "Effect
of heat treatment on the crystallisation of
cuprous oxide in glass", pages 24-33, see the
whole article
Derwent Japanese Patents Report, vol. 74, no.
36, 10 October 1974, Derwent Publications Ltd.
(Londres, GB) see page L1-(L3) & JP, A,
74032298 (MATSUSHITA ELECTRIC IND. CO
LTD) 29 August 1974**

(73) Titulaire : **KAGAN, Rubin
3 Place de la Nation
F-75001 Paris (FR)**

Titulaire : **KAGAN, Michel
36, avenue Jugnot
F-75018 Paris (FR)**
Titulaire : **KAGAN, Jean
8, rue Guy-Labarbe
F-94130 Norgent-sur-Marne (FR)**
Titulaire : **VERITA, Livio
Via Paolo Erizzo, 7
I-30100 Venise Lido (IT)**

(72) Inventeur : **KAGAN, Rubin
3 Place de la Nation
F-75001 Paris (FR)**
Inventeur : **KAGAN, Michel
36, avenue Jugnot
F-75018 Paris (FR)**
Inventeur : **KAGAN, Jean
8, rue Guy-Labarbe
F-94130 Norgent-sur-Marne (FR)**
Inventeur : **VERITA, Livio
Via Paolo Erizzo, 7
I-30100 Venise Lido (IT)**

(74) Mandataire : **Armengaud, Alain
Cabinet ARMENGAUD AINE 3, Avenue
Bugeaud
F-75116 Paris (FR)**

EP 0 403 622 B1

## Description

La présente invention est relative à un procédé de fabrication d'un matériau vitreux présentant une coloration rouge sang de boeuf pouvant être utilisé notamment en joaillerie.

Le matériau objet de la présente invention comporte une matrice vitreuse transparente et non colorée, composée essentiellement de silicate de plomb, comportant en grande quantité des cristaux de cuprite ($CU_2O$) qui rendent le matériau opaque et lui donnent une coloration rouge sang de boeuf caractéristique.

Le procédé de fabrication du matériau défini ci-dessus selon la présente invention est caractérisé en ce qu'il comporte les étapes suivantes :

a) préparation d'un bain ou fonte de silicate de plomb, réalisée en mélangeant de l'oxyde de plomb PbO et de la silice $SiO_2$ dans des proportions telles que le rapport entre ces deux composants soit de 65 % en poids d'oxyde de plomb et 35 % en poids de silice, la température de fusion étant choisie entre 1000 et 1300°C environ.

b) introduction dans le bain en fusion obtenu à l'étape ci-dessus d'oxyde de cuivre et d'un agent réducteur, la quantité de cette addition de cuivre étant telle que la concentration en poids de l'oxyde dans le produit final soit de 6 à 8 % environ, la température du bain en fusion étant maintenue entre 1000 et 1300°C.

c) maintien du bain en fusion au repos toujours à la même température d'environ 1000 à 1300°C, de manière à éliminer les bulles.

d) traitement thermique du matériau ainsi obtenu à une température comprise entre 500 et 800°C environ pendant un temps suffisant pour réaliser la formation et la croissance de micro-cristaux de cuprite ($Cu_2O$).

e) refroidissement lent jusqu'à la température ambiante de la masse obtenue afin d'éviter la formation de contraintes résiduelles dans cette masse.

Pour obtenir le bain de fusion ou fonte de base lors de la première étape du procédé selon l'invention, on peut utiliser du sable silicieux et du minium ou bien encore une fritte de silicate de plomb. Lors de cette première étape, on peut prévoir des additions faibles d'autres composants tels que notamment des oxydes de lithium, de sodium, de potassium, de calcium, de magnésium, de baryum, d'aluminium, de phosphore, etc. de façon à modifier les propriétés chimiques, physiques et mécaniques du matériau finalement obtenu. Lors de l'étape finale de traitement thermique à une température comprise entre 500 et 800°C environ, les micro-cristaux de cuprite formés lors de cette étape se séparent du matériau vitreux et se développent et croissent en fonction de la température et du temps de séjour. Généralement on observe la formation de cristallites rouges en forme de rameaux ou de branches entrelacées de dimensions variables, de l'ordre de quelques microns (de préférence deux microns environ) à 2 mm environ. Plus le temps de séjour est élevé, à la température de croissance des cristaux, plus les dimensions des cristaux sont importantes. La couleur rouge vif caractéristique du matériau objet de la présente invention est obtenue en réalisant le traitement thermique de la fonte dans la gamme de températures mentionnée ci-dessus. En ce qui concerne la durée du traitement, celle-ci est fonction de la masse de la matière fondue traitée ainsi que de sa composition, cette durée de traitement pouvant varier de quelques minutes jusqu'à quelques heures. La densité du matériau selon l'invention est comprise entre 4,0 et 4,5 environ.

On a donné ci-après à titre d'exemple non limitatif, un-mode de mise en oeuvre d'un procédé d'obtention objet de la présente invention.

Afin d'obtenir une matière vitreuse à couleur caractéristique rouge sang de boeuf et comportant des micro-inclusions de cristaux de cuprite, cette matière présentant la composition suivante (en pourcentage en poids) :

| | | | |
|---|---|---|---|
| PbO | 52 % | $SiO_2$ | 28 % |
| $Cu_2O$ | 6 % | $Sb_2O_3$ | 1 % |
| $K_2O$ | 5 % | $Na_2O$ | 2,5 % |
| $Al_2O_3$ | 2 % | CaO | 3 % |
| $P_2O_5$ | 0,5 % | | |

on a préparé un mélange en quantités stoechiométriques appropriées de sable silicieux, de minium, de carbonate de potassium, de feldspath de sodium, de phosphate de sodium et de carbonate de calcium et on a fait fondre ce mélange à une température de l'ordre de 1200°C.

Après achèvement de la fusion, on a ajouté les quantités appropriées mentionnées ci-dessus de $Cu_2O$ et d'antimoine métallique, en remuant énergiquement de façon à obtenir un liquide homogène, le bain étant maintenu durant ces additions, à la température d'environ 1200°C.

2

Toujours en maintenant cette même température, on a laissé le bain de fusion séjourner au repos afin d'éliminer les bulles, le temps de repos étant de l'ordre de quelques minutes à environ une demi-heure.

A la fin de l'affinage ainsi réalisé, on a effectué le traitement thermique du mélange à une température de l'ordre de 600°C, pendant un temps nécessaire, fonction de la masse traitée, de manière à réaliser la formation et la croissance des micro-cristaux de cuprite (Cu$_2$O) dans la masse du matériau. Après le traitement thermique mentionné ci-dessus, on a laissé le matériau se refroidir lentement jusqu'à la température ambiante afin d'y éviter la formation de contraintes résiduelles dans sa masse.

On a ainsi obtenu une masse vitreuse de couleur caractéristique sang de boeuf, présentant une grande quantité de cristaux de cuprite en forme d'étoiles, sous forme de micro-inclusions lui conférant ladite coloration caractéristique et rendant opaque la masse vitreuse. La densité du matériau résultant était de 4,2 environ.

Ce matériau peut être façonné à chaud comme les matériaux vitreux ou découpé, mollé et poli comme toute pierre dure. Il peut être utilisé de préférence en joaillerie. Sa coloration peut être homogène ou présenter des zones de tonalités différentes dans une gamme de couleurs allant du jaune orangé au rouge foncé, en fonction de la dimension des micro-cristaux de cuprite, les cristaux plus petits donnant une coloration jaune orangé tandis que les cristaux plus grands donnent au matériau une coloration rouge foncé.

Il demeure bien entendu que la présente invention n'est pas limitée aux exemples de réalisation décrits mais qu'elle en englobe toutes les variantes.

## Revendications

1. Procédé de fabrication d'un matériau présentant une coloration caractéristique allant du jaune orangé au rouge sang de boeuf, à base de silicate de plomb, caractérisé en ce qu'il comporte les étapes suivantes :
   a) préparation d'un bain ou fonte de silicate de plomb, réalisée en mélangeant de l'oxyde de plomb PbO et de la silice SiO$_2$ dans des proportions telles que le rapport entre ces deux composants soit de 65 % en poids d'oxyde de plomb et 35 % en poids de silice, la température de fusion étant choisie entre 1000 et 1300°C environ.
   b) introduction dans le bain en fusion obtenu à l'étape ci-dessus d'oxyde de cuivre et d'un agent réducteur, la quantité de cette addition étant telle que la concentration en poids de l'oxyde dans le produit final soit de 6 à 8 % environ la température du bain en fusion étant maintenue entre 1000 et 1300°C.
   c) maintien du bain en fusion au repos toujours à la même température d'environ 1000 à 1300°C, de manière à éliminer les bulles.
   d) traitement thermique du matériau ainsi obtenu à une température comprise entre 500 et 800°C environ pendant un temps suffisant pour réaliser la formation et la croissance de micro-cristaux de cuprite (Cu$_2$O).
   e) refroidissement lent jusqu'à la température ambiante de la masse obtenue afin d'éviter la formation de contraintes résiduelles dans cette masse.

2. Procédé selon la revendication 1, caractérisé en ce que, pour préparer le bain de fusion de base, on peut utiliser du sable silicieux et du minium ou bien encore une fritte de silicate de plomb.

3. Procédé selon l'une des revendications 1 ou 2, caractérisé en ce que lors de ladite première étape, on peut prévoir des additions faibles d'autres composants tels que notamment des oxydes de lithium, de sodium, de potassium, de calcium, de magnésium, de baryum, d'aluminium, de phosphore, de façon à modifier les propriétés chimiques, physiques et mécaniques du matériau finalement obtenu.

4. Procédé selon l'une quelconque des revendications précédentes, caractérisé en ce que le temps de maintien au repos avant l'étape de traitement thermique est de l'ordre de quelques minutes à une demi-heure.

5. Procédé selon l'une quelconque des revendications précédentes, caractérisé en ce que l'on choisit la température et le temps de séjour de la masse en fusion du matériau lors de l'étape de traitement thermique, en fonction de la dimension des micro-cristaux de cuprite que l'on désire obtenir.

6. Matériau obtenu par la mise en oeuvre du procédé selon l'une quelconque des revendications précédentes, caractérisé en ce qu'il comporte une matrice vitreuse transparente et non colorée, composée essentiellement de silicate de plomb, comportant en grande quantité des cristaux de cuprite (CU$_2$O) qui rendent le matériau opaque et lui donnent une coloration caractéristique allant du rouge orangé au rouge sang de boeuf, la densité du matériau étant comprise entre environ 4,0 et 4,5

7. Matériau selon la revendication 6, caractérisé en ce qu'il comporte la composition suivante en pourcentage en poids :

PbO ............... 52 %      SiO₂ ................ 28 %

Cu₂O .............. 6 %       Sb₂O₃ .............. 1 %

K₂O .............. 5 %        Na₂O ............... 2,5 %

Al₂O₃ ............ 2 %        CaO ................ 3 %

P₂O₆ ............. 0,5 %

8. Matériau selon l'une des revendications 6 ou 7 caractérisé en ce que la coloration jaune orangée est obtenue lors de la présence de cristaux de cuprite de faible dimension, alors que la couleur rouge sang de boeuf est obtenue par la présence de cristallites de cuprite de dimensions plus importantes, les dimensions variant entre quelques microns, de préférence deux microns, et 2 mm.

**Patentansprüche**

1. Verfahren zum Herstellen eines Materials mit einer charakteristischen, von gelborange bis blutrot gehenden Färbung auf Basis von Bleisilikat,
   dadurch **gekennzeichnet**,
   daß es folgende Stufen aufweist:
   a) Herstellung eines Bades oder einer Schmelze aus Bleisilikat, hergestellt durch Vermischen von Bleioxyd PbO und Siliciumdioxyd SiO₂ in solchen Anteilen, daß das Bleioxyd 65 Gew.-% und das Siliciumdioxyd 35 Gew.-% ausmacht, wobei die Schmelztemperatur in etwa zwischen 1000 und 1300°C gewählt wird,
   b) Zugabe von Kupferoxyd und eines Reduktionsmittels zu dem in der oben beschriebenen Stufe erhaltenen Schmelzbad, wobei die Zugabemenge derart ist, daß die Gewichtskonzentration des Oxyds in dem Endprodukt etwa 6 bis 8 % beträgt, und wobei die Temperatur des Schmelzbades zwischen 1000 und 1300°C gehalten wird,
   c) Halten des Schmelzbades im Ruhezustand immer bei der selben Temperatur von etwa 1000 bis 1300°C, so daß die Bläschen entfernt werden,
   d) thermische Behandlung des so erhaltenen Materials bei einer Temperatur von etwa 500 bis 800°C während einer solchen Zeitspanne, daß sich Mikrokristalle aus Cuprit (Cu₂O) bilden und wachsen,
   e) langsames Abkühlen bis auf Raumtemperatur der erhaltenen Masse, so daß die Bildung von Restspannungen in dieser Masse vermieden wird.

2. Verfahren nach Anspruch 1,
   dadurch **gekennzeichnet**,
   daß man zur Herstellung des am Anfang eingesetzten Schmelzbades Quarzsand und Mennige oder auch eine Bleisilikatglasmasse verwenden kann.

3. Verfahren nach Anspruch 1 oder 2,
   dadurch **gekennzeichnet**,
   daß man in der ersten Stufe geringe Mengen weiterer Bestandteile zugeben kann, wozu insbesondere Lithium-, Natrium-, Kalium-, Calzium-, Magnesium-, Barium-, Aluminium- und Phosphoroxyd zählen, so daß die chemischen, physikalischen und mechanischen Eigenschaften des letztendlich erhaltenen Materials verändert werden.

4. Verfahren nach einem der vorhergehenden Ansprüche,
   dadurch **gekennzeichnet**,
   daß die Ruhezeit vor der thermischen Behandlungsstufe einige Minuten bis zu einer halben Stunde beträgt.

5. Verfahren nach einem der vorhergehenden Ansprüche,
   dadurch **gekennzeichnet**,

daß man die Temperatur und die Verweilzeit der geschmolzenen Masse des Materials bei der thermischen Behandlungsstufe in Abhängigkeit von der Abmessung der Cuprit-Mikrokristalle, die man zu erhalten wünscht, wählt.

6. Material, erhalten nach dem Verfahren gemäß einem der vorhergehenden Ansprüche,
dadurch **gekennzeichnet**,
daß es eine transparente und nicht gefärbte glasige Matrix aufweist, die im wesentlichen aus Bleisilikat zusammengesetzt ist, das eine große Menge von Cupritkristallen ($Cu_2O$-Kristallen) enthält, welche das Material opak machen und ihm eine von gelborange bis blutrot gehende charakteristische Färbung verleihen, wobei die Dichte des Materials in etwa 4,0 bis 4,5 beträgt.

7. Material nach Anspruch 6,
dadurch **gekennzeichnet**,
daß es folgende Zusammensetzung besitzt, ausgedrückt in Gewichtsprozent:

| | | | |
|---|---|---|---|
| PbO | 52 | $SiO_2$ | 28% |
| $Cu_2O$ | 6% | $Sb_2O_3$ | 1% |
| $K_2O$ | 5% | $Na_2O$ | 2,5% |
| $Al_2O_3$ | 2% | CaO | 3% |
| $P_2O_5$ | 0,5% | | |

8. Material nach Anspruch 6 oder 7,
dadurch **gekennzeichnet**,
daß die gelborange Färbung bei Anwesenheit von Cupritkristallen geringer Abmessung erhalten ist, während die blutrote Farbe durch Anwesenheit von Cupritkristallen größerer Abmessungen erhalten ist, während die Abmessungen zwischen einigen μm, vorzugsweise 2 μm, und 2 mm variieren.

## Claims

1. Process for manufacturing a material having a characteristic colour ranging from orange yellow to blood red, based upon lead silicate, characterized in that it comprises the following steps:
a) preparation of a bath or smelt of lead silicate, produced by mixing lead oxide PbO and silica $SiO_2$ in proportions such that the ratio between these two components shall be 65% by weight lead oxide and 35% by weight silica, the fusion temperature being chosen between approximately 1,000 and 1,300°C,
b) introduction into the molten bath produced in the above step of copper oxide and a reducing agent, the quantity of this addition being such that the concentration by weight of the oxide in the final product shall be 6 to 8% approximately, the temperature of the molten bath being maintained between 1,000 and 1,300°C,
c) maintenance of the molten bath at rest still at the same temperature of approximately 1,000 to 1,300°C, so as to eliminate the bubbles,
d) thermal treatment of the material thus obtained at a temperature from 500 to 800°C approximately for a sufficiently long period to allow the formation and growth of cuprite microcrystals ($Cu_2O$),
e) slow cooling to ambient temperature of the mass obtained, in order to avoid the formation of residual stresses in this mass.

2. Process according to Claim 1, characterized in that, for preparing the basic molten bath, siliceous sand and minium, or a fritt of lead silicate, may be used.

3. Process according to one of Claims 1 or 2, characterized in that, during said first step, small additions of other components may be made such as, notably, oxides of lithium, sodium, potassium, calcium, magnesium, barium, aluminium, phosphorous, in such a way as to modify the chemical, physical and mechanical properties of the material finally obtained.

4. Process according to any one of the preceding Claims, characterized in that the holding time at rest before the thermal treatment step is of the order of several minutes to half an hour.

5. Process according to any one of the preceding Claims, characterized in that the temperature and the dwell time of the molten mass of the material during the thermal treatment stage are selected as a function of the dimension of the cuprite microcrystals which it is desired to produce.

6. Material produced by carrying out the process according to any one of the preceding Claims, characterized in that it comprises a transparent, colourless vitreous matrix, composed essentially of lead silicate, containing in a large quantity crystals of cuprite ($Cu_2O$) which make the material opaque and give it a characteristic colouration ranging from orange red to blood red, the density of the material being from approximately 4.0 to 4.5.

7. Material according to Claim 6, characterized in that it has the following composition in percentages by weight:

$$PbO \ldots\ldots\ldots 52\% \qquad SiO_2 \ldots\ldots\ldots 28\%$$
$$Cu_2O \ldots\ldots\ldots 6\% \qquad Sb_2O_3 \ldots\ldots\ldots 1\%$$
$$K_2O \ldots\ldots\ldots 5\% \qquad Na_2O \ldots\ldots\ldots 2.5\%$$
$$Al_2O_3 \ldots\ldots\ldots 2\% \qquad CaO \ldots\ldots\ldots 3\%$$
$$P_2O_5 \ldots\ldots\ldots 0.5\%$$

8. Material according to one of Claims 6 and 7, characterized in that the orange yellow colour is obtained with the presence of cuprite crystals of small dimensions, whereas the blood red colour is obtained with the presence of cuprite crystallites of larger dimensions, the dimension varying between a few microns, preferably two microns, and 2 mm.